# EUROPEAN PATENT SPECIFICATION

(11) **EP 1 834 993 B1**
(45) Date of publication and mention of the grant of the patent: **18.02.2009**
(21) Application number: 06003959.1
(22) Date of filing: 27.02.2006
(51) Int. Cl.: C08L 75/04, C08G 18/48, D06N 3/14, D06M 15/564

(54) **Water-vapor permeable polyurethane-based films and textiles**
Wasserdampfdurchlässige Filme, basierend auf Polyurethan, und Textilien
Films perméables à la vapeur d'eau à base de polyuréthane et textiles

(43) Date of publication of application: 19.09.2007
(73) Proprietor: Industrial Technology Research Institute, Chutung, Hsinchu 310 (TW)
(72) Inventor: Kong, Dan-Cheng, Hsinchu City 300 (TW); Chen, Lien Tai, Taoyuan City Taoyuan County 330 (TW); Chen, Ruei-Shin, Changhua City Changhua County 500 (TW)
(74) Representative: Fuchs

(56) References cited:
- EP-A- 0 347 794
- US-A- 4 452 845
- PATENT ABSTRACTS OF JAPAN vol. 015, no. 373 (C-0869), 19 September 1991 (1991-09-19) & JP 03 149233 A (SHOWA ELECTRIC WIRE & CABLE CO LTD), 25 June 1991 (1991-06-25)

## Description

### BACKGROUND OF THE INVENTION

### Field of the Invention

The invention relates to a polymer material, and in particular to a water-vapor permeable film and a textile comprising the same.

### Description of the Related Art

Thermoplastic polyurethane (TPU) is a soft elastomeric resin with high tensile strength, wearproof, low temperature resistance, and strong adhesion. The polyurethane, also meeting environmental requirements due to decomposability, with no use of solvent during processing, has been widely applied in textiles and ready-made clothes. In film processing, a thin (<20µm) and uniform (15%) film can be obtained using a blown film method.

When polyurethane film is rolled or pulled, film blocking may easily occur due to high surface friction force thereof, resulting in film breakage. Conventional addition methods are employed to solve the problem. Additive quantity, however, is large, increasing costs. Also, die-build-up may occur during fabrication due to water absorption of the polyurethane.

Thus, development of a water-vapor permeable film fabrication method with prevention of film blocking and die-build-up is desirable.

Current water-vapor permeable polyurethane fabrication methods mainly comprise adding hydrophilic functional groups to polymer structure. Other accessory methods such as adding absorbent powders, creating pores, forming cross-linking structure, or adding aromatic compounds also increase water-vapor permeability or film strength. There are many patents related to water-vapor permeable polyurethane, mainly comprising use of additives or film modification by back-end processing. Few, however, relate to film composition.

US 6,790,926 discloses a water vapor permeable polyurethane, and fabrication and application thereof. The polyurethane comprises a polyether-polyol containing high weight percentage of ethylene oxide (comprising polyethylene glycol (PEG) and 4,4-methylene bisphenyl diisocyanate (MDI)), a small molecule chain extender, and an araliphatic diol. Addition of the araliphatic diol containing benzene structure increases resin strength and reduces adhesion between films.

US 2004/092,696 discloses a polyurethane comprising a polyether intermediate containing ethylene oxide (containing two terminal hydroxyl functional groups) and a chain extender such as araliphatic diol. The polyurethane provides high melting temperature, high tensile strength, and anti-static electricity. This patent also discloses a textile combined with the polyurethane, capable of elongation, high water vapor permeability, thermal resistance, and processability.

US 2003/195,293 discloses an aqueous and water vapor permeable polyurethane comprising a polyol containing ethylene oxide. No emulsifying agent or amine neutralizer is required during water dispersion due to formation of the hydrophilic ethylene oxide chains, preventing pollution from solvents or small molecule vaporized substances. Wound dressing materials or textiles combined therewith also provide high water vapor permeability. Additionally, film strength is improved by addition of other polymer materials.

JP 2000/220,076 discloses a solvent-based polyurethane containing at least 20wt% ethylene oxide. To avoid over-concentration of ethylene oxide in soft segment, a diol chain extender containing ethylene oxide is further added to increase ethylene oxide content in hard segment. Thus, water vapor permeable groups are uniformly distributed in the polyurethane, increasing film strength.

DE 4,442,380 discloses a polyurethane comprising one or more polyether polyurethanes, one of which is a water vapor permeable polyethylene glycol polyurethane, and other polyurethanes selected by strength requirements. Ethylene oxide content and mixing ratio among polyether polyurethanes are defined. Polyester polyurethanes, however, are not suitable for use due to lower water vapor permeability.

DE 4,339,475 discloses a polyurethane having 35∼60wt% ethylene oxide comprising polyether-polyol. To facilitate coating, melting viscosity less than 70 is required. The small molecule chain extender comprises ether-diol and ester-diol. Large molecule polyester-polyol, however, is not used.

US 5,254,641 discloses a water vapor permeable polyurethane film comprising a polyurethane containing polyethylene glycol (PEG) with a hardness of 75A-92A and 5∼20wt% polyether-amide or polyether-ester. Film strength can be effectively improved by addition of the polyether-amide or polyether-ester.

US 5,283,112 discloses a polyurethane comprising a hydrophilic polyethylene glycol (PEG) and a hydrophobic polydimethyl siloxane (PDMS). During fabrication, phase separation is more complete due to different hydrophilicity of components, resulting in stronger film. Also, softness of polyurethane and its adhesion to substrate can be improved by addition of PDMS.

EP 335,276 discloses a water vapor permeable non-yellowing polyurethane comprising an aliphatic or cyclo-aliphatic diisocyanate, a polyether-polyol containing ethylene oxide, and a diol. The soft polyurethane having optimal physical modulus can be obtained, suitable for use in extrusion processing.

GB 2,087,909 discloses a solvent-based polyurethane. A short-chain diol is first mixed with exceeding duisocyanate to form a pre-polymer. Next, a polyethylene glycol (PEG) is added thereto. A polyurethane containing 25∼40wt% polyethylene glycol is thus formed. Film strength is improved by addition of the longer hard segment pre-polymer comprising the diol and diisocyante.

WO 9,000,969, WO 9,000,180, and GB 2,157,703 disclose a two-component or pre-polymer-type polyurethane comprising a polyether-polyol such as polyethylene glycol (PEG), a chain extender, and a cross-linking reagent. The resulting polyurethane has exceeding NCO and provides low viscosity. Additionally, film strength is increased by formation of cross-linking structure.

US 4, 452, 845 A discloses a water-vapor permeable film comprising low density polyethylene (PE). It is suggested that the LDPE comprising film is stretched in order to produce voids within the film material so that water-vapor can pass through the film.

### BRIEF SUMMARY OF THE INVENTION

The invention provides a thermoplastic water-vapor permeable film comprising 90-99wt% polyurethane (PU) and 1-10wt% high density polyethylene (HDPE)The film comprises single or multiple layers.

The invention also provides a water-vapor permeable textile comprising a fabric with the disclosed water-vapor permeable film laminated thereonto with an adhesive.

A detailed description is given in the following embodiments.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

The invention provides a thermoplastic water-vapor permeable film comprising 90-99wt% polyurethane (PU) and 1-10wt% high density polyethylene (HDPE). The film may be single or multiple layers with co-extrusion structure.

The thermoplastic water-vapor permeable film may be a single layer comprising 90-99wt% polyurethane (PU) and 1-10wt% high density polyethylene (HDPE).

The thermoplastic water-vapor permeable film may be a double layer such as A/B. A layer may comprise 90-99wt% polyurethane (PU) and 1-10wt% high density polyethylene (HDPE). B layer may comprise 90-99wt% polyurethane (PU), 1-10wt% high density polyethylene (HDPE), 1,000-2,000ppm anti-block, and 500∼2,000ppm migratory slip additive.

The thermoplastic water-vapor permeable film may be a triple layer such as A/B/A. A layer may comprise 90-99wt% polyurethane (PU) and 1-10wt% high density polyethylene (HOPE). B layer may comprise polyurethane (PU) and 500∼2,000ppm migratory slip additive.

The polyurethane is thermoplastic polyurethane comprising hard segment and soft segment. The hard segment may comprise aromatic polyisocyanate such as 4,4-methylene bisphenyl diisocyanate (MDI) or toluene diisocyanate (TDI). The soft segment may comprise polyether-polyol such as polyethylene glycol (PEG), polypropylene glycol (PPG), polytetramethylene glycol (PTMG) or 1,4-butane diol (1,4-BD), or polyester-polyol such as poly(1,4-butylene adipate) (PBA). In the polyurethane, the hard segment and soft segment have a ratio of about 0.5∼0.8. Preferably, the polyurethane has a NCO/OH ratio of about 0.9∼1.2.

The thermoplastic polyurethane may comprise hydrophilic polyether-polyol, aromatic polyisocyanate, or aliphatic polyester-polyol. In the polyurethane, the polyether-polyol has a weight ratio of about 20∼60%. The polyurethane has a NCO/OH ratio of about 0.9∼1.2.

The polyethylene is high density polyethylene (HDPE) of density of about 0.941-0.970g/cm³.

Preferably, the polyethylene has a weight ratio of about 1∼8%, most preferably 2∼7%. The film further comprises 500∼3,000ppm anti-block, preferably 1,000∼2,000ppm, or 500∼2,000ppm slip additive. The anti-block may comprise silica, aluminum silicate, magnesium silicate, calcium carbonate, clay, crosslinked silicone sphere, crosslinked spherical particles of polymethyl methacrylate copolymer, or a combination thereof. The slip additive may comprise silicone gum, wax, polydiallyl siloxane or fatty amides such as erucamide and oleamide.

The film is non-porous and has a thickness of 5∼100µm, preferably, 8∼50µm, most preferably 10∼30µm, a water-vapor permeability exceeding 500g/m²/day (test method JIS1099A-2), an elastic recovery exceeding 75% (test method DIN53835), and an elongation to break exceeding 300% (test method ASTMD412).

In the invention, polyethylene with no water absorption and low surface friction force is added to the polyurethane to prevent film blocking and die-build-up during film fabrication, increasing yield. Additionally, the water-vapor permeability of the polyurethane can be maintained due to less polyethylene added. Also, the anti-block is used as a lubricant to avoid film blocking.

In subsequent blown film processing, the blow-up ratio is about 1.5∼3.0, preferably 2.0.

Additionally, the fabrication method of the water-vapor permeable film may also comprise cast film or extrusion coating.

The invention also provides a textile comprising a fabric with the disclosed water-vapor permeable film laminated thereonto with an adhesive exhibiting a non-continuous distribution.

The fabric may be woven, knitted, or non-woven. The textile can be widely applied in clothes, automobile industry, medical articles, sport articles, bedding, or glass industry.

## Claims

1. A water-vapor permeable film comprising 90 - 99 wt% thermoplastic polyurethane (TPU) and 1-10 wt% high density polyethylene (HDPE) of density of 0.941 - 0.970 g/cm³.

2. The water-vapor permeable film as claimed in claim 1, wherein the polyurethane comprises hard segment comprising aromatic polyisocyanate and soft segment comprising polyetherpolyol.

3. The water-vapor permeable film as claimed in claim 2, wherein the aromatic polyisocyanate comprises 4,4-methylene bisphenyl diisocyanate (MDI) or toluene diisocyanate (TDI).

4. The water-vapor permeable film as claimed in claim 2, wherein the polyether-polyol comprises polyethylene glycol (PEG), polypropylene glycol (PPG), or polytetramethylene glycol (PTMG).

5. The water-vapor permeable film as claimed in claim 2, wherein the hard segment and soft segment have a ratio of 0.5 - 0.8.

6. The water-vapor permeable film as claimed in claim 1, wherein the polyethylene has a weight ratio of 1 - 8 %.

7. The water-vapor permeable film as claimed in claim 6, wherein the polyethylene has a weight ratio of 2 - 7 %.

8. The water-vapor permeable film as claimed in claim 1, further comprising polyester-polyol.

9. The water-vapor permeable film as claimed in 8, wherein the polyester-polyol comprises poly(1,4-butylene adipate) (PBA).

10. The water-vapor permeable film as claimed in claim 1, further comprising anti-block of a quantity of 500 - 3,000ppm comprising silica, aluminium silicate, magnesium silicate, calcium carbonate, clay, crosslinked silicone sphere, crosslinked spherical particles of polymethyl methacrylate copolymer, or a combination thereof.

11. The water-vapor permeable film as claimed in claim 1, further comprising slip-additive comprising silicone gum, wax, polydiallyl siloxane, fatty amides, or a combination thereof.

12. The water-vapor permeable film as claimed in claim 1, wherein the film has an elastic recovery exceeding 75%.

13. The water-vapor permeable film as claimed in claim 1, wherein the film has an elongation to break exceeding 300%.

14. A water-vapor permeable textile, comprising a fabric; and a water-vapor permeable film as claimed in claim 1, laminated onto the fabric with an adhesive.

15. The water-vapor permeable textile as claimed in claim 14, wherein the fabric is woven, knitted, or non-woven.

16. The water-vapor permeable textile as claimed in claim 14, wherein the adhesive exhibits a non-continuous distribution.

17. The water-vapor permeable textile as claimed in claim 14, wherein the textile is applied in clothes, automobile industry, medical articles, sport articles, bedding, or glass industry.

## Patentansprüche

1. Ein wasserdampfdurchlässiger Film umfassend 90 bis 99 Gewichtsprozent thermoplastisches Polyurethan (TPU) und 1 bis 10 Gewichtsprozent Polyethylen hoher Dichte (HDPE) einer Dichte von 0,941 bis 0,970 g/cm³.

2. Der wasserdampfdurchlässige Film nach Anspruch 1, wobei das Polyurethan Hartsegment mit aromatischem Polyisocyanat und Weichsegment mit Polyetherpolyol umfasst.

3. Der wasserdampfdurchlässige Film nach Anspruch 2, wobei das aromatische Polyisocyanat 4,4-Methylenbisphenyldiisocyanat (MDI) oder Toluendiisocyanat (TDI) umfasst.

4. Der wasserdampfdurchlässige Film nach Anspruch 2, wobei das Polyetherpolyol Polyethylenglykol (PEG), Polypropylenglykol (PPG) oder Polytetramethylenglykol (PTMG) umfasst.

5. Der wasserdampfdurchlässige Film nach Anspruch 2, wobei das Hartsegment und das Weichsegment ein Verhältnis von 0,5 bis 0,8 haben.

6. Der wasserdampfdurchlässige Film nach Anspruch 1, wobei das Polyethylen einen Gewichtsanteil von 1 bis 8% hat.

7. Der wasserdampfdurchlässige Film nach Anspruch 6, wobei das Polyethylen einen Gewichtsanteil von 2 bis 7% hat.

8. Der wasserdampfdurchlässige Film nach Anspruch 1, weiterhin umfassend Polyesterpolyol.

9. Der wasserdampfdurchlässige Film nach Anspruch 8, wobei das Polyesterpolyol Poly(1,4butylenadipat) (PBA) umfasst.

10. Der wasserdampfdurchlässige Film nach Anspruch 1, weiterhin umfassend Antiblockmittel einer Menge von 500 bis 3.000 ppm umfassend Siliciumdioxid, Aluminiumsilicat, Magnesiumsilicat, Calciumcarbonat, Ton, quervernetzte Siliconkugel, quervernetzte sphärische Partikel aus Polymethylmethacrylatcopolymer, oder einer Kombination hieraus.

11. Der wasserdampfdurchlässige Film nach Anspruch 1, weiterhin umfassend Gleitmittel umfassend Silicongummi, Wachs, Polydiallylsiloxan, Fettsäureamide, oder eine Kombination hieraus.

12. Der wasserdampfdurchlässige Film nach Anspruch 1, wobei der Film eine elastische Rückverformung von über 75% aufweist.

13. Der wasserdampfdurchlässige Film nach Anspruch 1, wobei der Film eine Bruchdehnung von über 300% aufweist.

14. Eine wasserdampfdurchlässige Textilie umfassend ein Gewebe; und ein wasserdampfdurchlässiger Film nach Anspruch 1, welcher mit einem Adhesiv auf das Gewebe laminiert ist.

15. Die wasserdampfdurchlässige Textilie nach Anspruch 14, wobei das Gewebe gewebt, gestrickt oder nichtgewebt ist.

16. Die wasserdampfdurchlässige Textilie nach Anspruch 14, wobei das Adhäsiv eine nicht-kontinuierliche Verteilung aufweist.

17. Die wasserdampfdurchlässige Textilie nach Anspruch 14, wobei die Textilie in Bekleidung, der Automobilindustrie, bei medizinischen Gegenständen, Sportgegenständen, bei Bettwäsche oder in der Glasindustrie verwendet wird.

## Revendications

1. Un film perméable à la vapeur et à l'eau comprenant 90 à 99% en poids de polyuréthane thermoplastique (TPU) et 1 à 10% en poids de polyéthylène haute densité (HDPE) de densité de 0,941 à 0,970 g/cm^{3.}

2. Le film perméable à la vapeur et l'eau ainsi que revendiqué dans la revendication 1, dans lequel le polyuréthane comprend un segment dur comprenant un polyisocyanate aromatique et un segment mou comprenant un polyétherpolyol.

3. Le film perméable à la vapeur et l'eau ainsi que revendiqué dans la revendication 2, dans lequel le polyisocyanate aromatique comprend du diisocyanate de 4,4-méthylène bisphényl (MOI) ou du diisocyanate de toluène (TDI).

4. Le film perméable à la vapeur et l'eau ainsi que revendiqué dans la revendication 2, dans lequel le polyétherpolyol comprend du polyéthylène glycol (PEG), du polypropylène glycol (PPG) ou du polytétraméthylène glycol (PTMG).

5. Le film perméable à la vapeur et l'eau ainsi que revendiqué dans la revendication 2. dans lequel le segment dur et le segment mou sont présents en un rapport de 0,5 à 0,8.

6. Le film perméable à la vapeur et l'eau ainsi que revendiqué dans la revendication 1, dans lequel le polyéthylène est présent en un rapport pondéral de 1 à 8%.

7. Le film perméable à la vapeur et l'eau ainsi que revendiqué dans la revendication 6, dans lequel le polyéthylène est présent en un rapport pondéral de 2 à 7%.

8. Le film perméable à la vapeur et l'eau ainsi que revendiqué dans la revendication 1, comprenant en outre du polyester-polyol.

9. Le film perméable à la vapeur et l'eau ainsi que revendiqué dans la revendication 8, dans lequel le polyester-polyol comprend du poly(1,4-butylène adipate) (PBA).

10. Le film perméable à la vapeur et l'eau ainsi que revendiqué dans la revendication 1, comprenant en outre un agent anti-adhérent en une quantité de 500 à 3000 ppm comprenant de la silice, du silicate d'aluminium, du silicate de magnésium, du carbonate de calcium, de l'argile, des sphères de silicone réticulé, des particules sphériques réticulées de copolymère de poly-(méthylméthacrylate) ou de leurs combinaison.

11. Le film perméable à la vapeur et l'eau' ainsi que revendiqué dans la revendication 1, comprenant en outre un additif de lubrification comprenant de la gomme de silicone, de la cire, du siloxane de polydiallyle, des amides gras, ou leur combinaison.

12. Le film perméable à la vapeur et l'eau ainsi que revendiqué dans la revendication 1, dans lequel le film présente une récupération élastique supérieure à 75%.

13. Le film perméable à la vapeur et l'eau ainsi que revendiqué dans la revendication 1, dans lequel le film présente un allongement à la rupture supérieur à 300%.

14. Un textile perméable à la vapeur et à l'eau , comprenant un tissu; et un film perméable à la vapeur et à l'eau ainsi que revendiqué dans la revendication 1, appliqué par stratification sur le tissu à l'aide d'un adhésif.

15. Le textile perméable à la vapeur et à l'eau ainsi que revendiqué dans la revendication 14, dans lequel le tissu est tissé, tricoté ou non-tissé.

16. Le textile perméable à la vapeur et à l'eau ainsi que revendiqué dans la revendication 14, dans lequel l'adhésif présente une distribution non continue.

17. Le textile perméable à la vapeur et à l'eau ainsi que revendiqué dans la revendication 14, dans lequel le textile est employé dans l'industrie du vêtement, l'industrie automobile, des articles médicaux, des articles de sport ou dans l'industrie verrière.
